# EUROPÄISCHE PATENTANMELDUNG

(11) **EP 1 004 982 A2**
(43) Veröffentlichungstag der Anmeldung: **31.05.2000**
(21) Anmeldenummer: 99122723.2
(22) Anmeldetag: 16.11.1999
(51) Int. Cl.: G06K 19/077

(54) **Kartencontainer zur Aufnahme von Ausweis- oder Kreditkarten**

(30) Priorität: 27.11.1998 DE 19854799
(71) Anmelder: Krammel, Werner Johann, 93077 Bad Abbach (DE)
(72) Erfinder: Krammel, Werner Johann, 93077 Bad Abbach (DE)

(57) **Zusammenfassung**

Kartencontainer zur Aufrahme von Ausweis - oder Kreditkarten bestehend aus der Kopfplatte (1), den Distanzelementen (2) und der Grundplatte (3), die ein oder mehrere Kartenstapel umfassen. Die Karten sind mit der langen Seile (16) parallel und mit der kurzen Seite (17) linear und im gleichen Abstand (B) voneinander im Kartencontainer angeordnet. Die inneren Aussparungen (8) der Kopfplatte (1) entsprechen der Grundflächenform der Ausweis- oder Kreditkarten. Die inneren Durchbrüche (10) der Grundplatte (3) sind kleiner als die Grundflächenform der Ausweis- oder Kreditkarten gestaltet. Die Distanzelemente (2) werden zwischen der Grundplatte (3) und der Kopfplatte (1) in der Weise befestigt, dass die äusseren Kanten oder Flächen der Distanzelemente (2) einem umlaufenden Abstand (A) von den Aussenkanten mit der Grundplatte (3) und Kopfplatte (1) bilden.

## Beschreibung

Die Erfindung betrifft einen Kartencontainer zur Aufnahme von Ausweis- oder Kreditkarten nach dem Oberbegriff des Anspruchs 1.

Bekannt ist, daß Kartenmagazine zur Aufnahme von Ausweis- oder Kreditkarten verwendet werden. Kartenmagazine dienen dem sicheren Transport von Ausweis- oder Kreditkarten zwischen den Bearbeitungsmaschinen. Spezielle Vorrichtungen in den Bearbeitungmaschinen entnehmen einzelne Ausweis- oder Kreditkarten aus dem Kartenmagazin. Nach der entsprechenden Bearbeitung werden diese Karten dem Kartenmagazin wieder zugeführt.

Kartenmagazine für Ausweis- oder Kreditkarten sind beispielsweise aus DE 42 04 464 bekannt. Das Kartenmagazin aus DE 42 04 464 besteht im wesentlichen aus einer kastenförmigen Wandung zur stapelnden Aufnahme der Karten mit freien inneren Querschnitt, welcher der rechteckigen Grundflächenform der Karten entspricht, sowie einer Haltevorrichtung zur Lagefixierung der von der Wandung aufgenommenen Karten, die am unteren Ende angeordnet ist. Die Haltevorrichtung weist dabei zwei zusammenwirkende Klinken oder dergleichen auf; die in zwei einander gegenüberliegenden Wänden der aus einem Hohlprofil gebildeten Wandung versenkt angelenkt und derart ausgebildet sind, dass der freie Querschnitt der Wandung zur Lagefixierung der von der Wandung bereits aufgenommen Karten verkleinerbar ist.

Kennzeichnend für dieses Magazin und andere auf dem Markt vorhandene Kartenmagazine ist eine Haltevorrichtung für die Karten im unteren Bereich des Kartenmagazins. Die Aufgabe dieser Haltevorrichtung besteht darin, die maschinelle Entnahme von Karten von unten aus dem Magazin, die maschinelle Zufuhr von Karten von unten in das Magazin und das Stapeln der Karten im Magazin zu gewährleisten. Ein weiteres wesentliches Kennzeichen für diese Kartenmagazine ist, das bisher nur ein Stapel Karten im Magazin aufgenommen wird, wodurch die Kosten zum Speichern von großen Kartenmengen aufgrund der großen Anzahl der Kartenmagazine steigen.

Der Erfindung liegt daher die Aufgabe zugrunde, einen Kartencontainer für Ausweis- oder Kreditkarten zu entwickeln, der einen oder mehrere Kartenstapel und somit große Kartenmengen gleichzeitig aufnimmt. Durch den einfachen Aufbau des Kartencontainers aus wenigen Bauteilen wird eine kostengünstige Herstellung ermöglicht, um den Kartencontainer nicht nur für den Kartentransport, sondern auch als universellen Kartenspeicher für Lagerzwecke zu verwenden.

Die Aufgabe ist mit dem Merkmal des Anspruchs 1 gelöst. Entsprechende Weiterbildungen sind Gegenstand der Unteransprüche

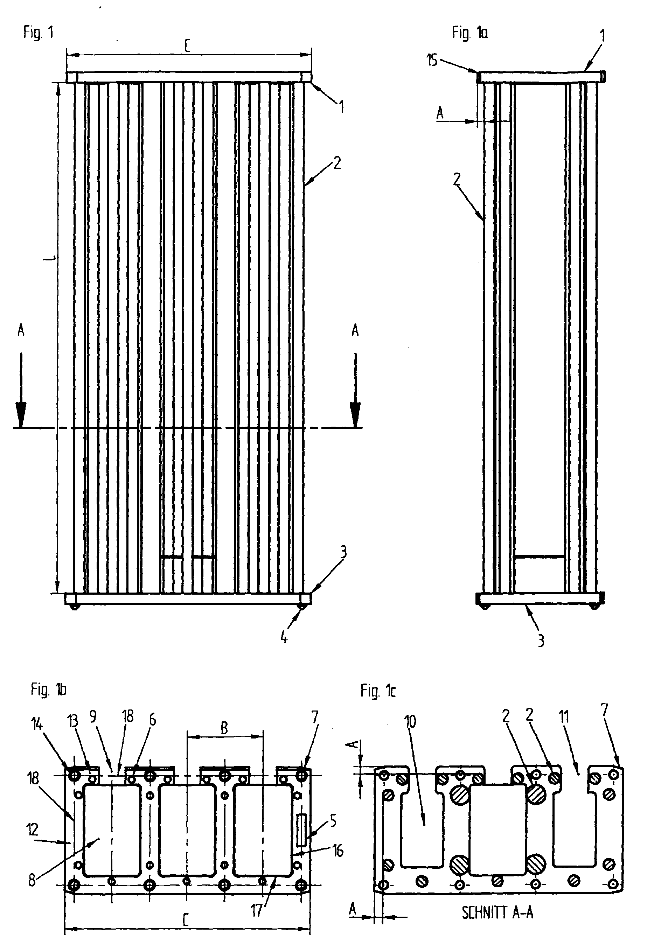

Ein Ausführungsbeispiel der Erfindung wird anhand schematischer Zeichnungen mit den entsprechenden Einzelheiten erläutert. Gezeigt werden in
- Fig. 1: Kartencontainer - Vorderansicht
- Fig. 1a: Kartencontainer - Seitenansicht
- Fig. 1b: Kartencontainer - Draufsicht
- Fig. 1c: Kartencontainer - Schnitt

Die Fig. 1 zeigt einen erfindungsgemäßen Kartencontainer in der Vorderansicht
Der Kartencontainer kann in dieser gezeigten Darstellung bis zu 3 Kartenstapel gleichzeitig aufnehmen. Aus der Darstellung wird ersichtlich, dass die Anzahl der Kartenstapel pro Kartencontainer von 1 bis z.B 10 oder mehr variabel ist.
Der Kartencontainer besteht im wesentlichen aus einer Kopfplatte 1 , der Grundplatte 3, den Distanzelementen 2 und den Fixierbolzen 4. Durch die Änderung der Anzahl der Kartenstapel kann das aufnehmbare Kartenvolumen pro Kartencontainer und durch die Änderung der Länge L der Distanzelemente 2 das aufnehmbare Kartenvolumen pro Kartenstapel entsprechend den individuellen Kundenanforderungen variert werden. Die Fixierbolzen 4 an der Grundplatte 3 ermöglichen ein sicheres vertikales Stapeln mehrerer Kartencontainer.

Die Fig. 1a zeigt einen erfindungsgemäßen Kartencontainer in der Seitenansicht
Der Kartencontainer ist in der Weise aufgebaut, das die Distanzelemente 2 zwischen der Grundplatte 3 und der Kopfplatte 1 in der Weise befestigt sind, das die äusseren Kanten oder Flächen der Distanzelemente 2 einen Abstand A von den Aussenkanten- oder flächen der Kopfplatte 1 oder Grundplatte 3 bilden. Der Absatz 15 in der Kopfplatte 1 dient dazu, das der Kartencontainer in einer definierten Orientierung der Bearbeitungsmaschine zugeführt wird.

Fig. 1b zeigt einen erfindungsgemässen Kartencontainer in der Draufsicht
Die Kartenstapel sind beispielhaft mit der langen Seite 16 parallel und mit der kurzen Seite 17 der Karte linear im gleichen Abstand B voneinander angeordnet. Eine weitere alternative Anordnung besteht darin, das die Karten mit den kurzen Seite 17 parallel und mit den langen Seiten 16 im gleichen Abstand B voneinander angeordnet werden können. Die innere Aussparung 8 für die Karten in der Kopfplatte 1 entspricht der rechteckigen Grundflächenform der Karte. Die Zentrierbohrungen 14 in der Kopfplatte 1 kreuzen sich in den Mittelachsen 18 der vertikalen Stege 12 und horizontalen Stege 13. Die Zentrierbohrungen 14 in der Kopfplatte 1 liegen in einer Achse mit den Fixierbolzen 4 in der Grundplatte 3.

Die äussere Aussparung 9 in der Kopfplatte 1 dient dem manuellen oder maschinellen Zuführen und Entnehmen der Karten aus dem Kartencontainer. An den vier Ecken der Kopflatte 1 und der Grundplatte 3 sind Einlaufschrägen 7 angeordnet. Desweiteren sind in der Kopfplatte 1 ein optisches oder elektronisches Identifikationselement 5 zur Erfassung von Bearbeitungsdaten integriert. Die Distanzelemente 2 sind vorzugsweise mit einer Schraubverbindung 6 mit der Kopfplatte 1 bzw. Grundplatte 3 verbunden.

Fig. 1c zeigt einen erfindungsgemässen Kartencontainer im Schnitt
Die inneren Kanten oder Flächen der Distanzelemente 2 dienen als seitliche Begrenzung der Karten. Die Distanzelemente 2 bestehen aus Kostengründen vorzugweise aus Halbzeugen. Der innere Durchbruch 10 der Grundplatte 3 ist Meiner ist als die rechteckige Grundflächenform der Karte und dient somit als sichere Auflage für die Karte.
Der äussere Durchbruch 11 dient dem manuellen oder maschinellen Entnehmen und Zuführen der Karten aus dem Container. Die Distanzelemente 2 sind zwischen der Grundplatte 3 und der Kopfplatte 1 in der Weise angeordnet ist, das die äussere Kante oder Fläche der Distanzelemente 2 mit der Aussenkante- oder fläche der Kopfplatte 1 oder Grundplatte 3 einen Abstand A bilden.

## Patentansprüche

1. Kartencontainer, zur Aufnahme von Ausweis- oder Kreditkarten, in dem ein oder mehrere Kartenstapel von der Kopfplatte (1), den Distanzelementen (2) und der Grundplatte (3) umfasst werden, dadurch gekennnzeichnet, dass die Kartenstapel mit der langen Seite (16) parallel und mit der kurzen Seite (17) linear und im gleichen Abstand (B) voneinander angeordnet, die inneren Aussparungen (8) der Kopfplatte (1) der Grundflächenform der Ausweis-oder Kreditkarten entsprechen, die inneren Durchbrüche (10) der Grundplatte (3) kleiner als die Grundflächenform der Ausweis-oder Kreditkarten gestaltet sowie die Distanzelemente (2) zwischen der Grundplatte (3) und der Kopfplatte (1) und die äusseren Kanten oder Flächen der Distanzelemente (2) in einem umlaufenden Abstand A von den Aussenkanten der Grundplatte (3) und Kopfplatte (1) befestigt sind.

2. Kartencontainer nach Anspruch 1, dadurch gekennzeichnet, dass die Länge (C) der Kopfplatte (1) variert, indem die Anzahl der aufnehmbaren Kartenstapel und somit die Anzahl der inneren Aussparungen (8) mit den dazugehörigen äusseren Aussparungen (9) in der Kopfplatte (1) variabel sind.

3. Kartencontainer nach Anspruch 1 bis 2, dadurch gekennzeichnet, dass in der Kopfplatte (1) ein optisches oder elektronisches Identifikationselement (5) bündig mit der Oberfläche und ein Absatz (15) integriert ist.

4. Kartencontainer nach Anspruch 1 bis 3, dadurch gekennzeichnet, dass die Zentrierbohrungen (14) in der Kopfplatte(1) in den Kreuzungspunkten liegen, in dem sich die Mittelachsen (18) der horizontalen Stege (13) und vertikalen Stege (12) kreuzen.

5. Kartencontainer nach Anspruch 1 bis 4, dadurch gekennzeichnet, dass die Länge (C) der Grundplatte (3) variert, indem Anzahl der Kartenstapel und somit die Anzahl der inneren Durchbrüche (10) mit den dazugehörigen äusseren Durchbrüche (11) in der Grundplatte (3) variabel sind.

6. Kartencontainer nach Anspruch 1 bis 5, dadurch gekennzeichnet, dass der innere Durchbruch (10) in der Grundplatte (3) kleiner als die Grundfläche der Karten ist.

7. Kartencontainer nach Anspruch 1 bis 6, dadurch gekennzeichnet, dass die Fixierbolzen (4) an der Grundplatte (3) in der Weise befestigt sind, dass diese in einer Achse mit den Zentrierbohrungen (14) in der Kopfplatte (1) liegen.

8. Kartencontainer nach Anspruch 1 bis 7, dadurch gekennzeichnet, dass die Länge (L) der Distanzelemente (2) variert, und die inneren Kanten oder Flächen der Distanzelemente (2) als seitliche Begrenzung für die Karten dienen, wobei die Distanzelemente mit deren äusseren Kanten oder Flächen in einem umlaufenden Abstand (A) von der Aussenkante- oder fläche der Grundplatte (3) und Kopfplatte (1) angeordnet sind.

9. Kartencontainer nach Anspruch 1 bis 8, dadurch gekennzeichnet, dass die Distanzelemente (2) vorzugsweise aus Halbzeugen hergestellt, zwischen der Kopfplatte (1) und der Grundplatte (3) angeordnet und durch eine Schraubverbindung (6) mit der Kopfplatte (1) und der Grundplatte (3) verbunden sind.

10. Kartencontainer nach Anspruch 1 bis 9, dadurch gekennzeichnet, dass die Karten im Kartencontainer mit der kurzen Seite (17) der Karte parallel und mit der langen Seite (16) der Karte linear und im gleichen Abstand (B) voneinander angeordnet sind.
